# EUROPEAN PATENT SPECIFICATION

(11) **EP 2 582 860 B1**
(45) Date of publication and mention of the grant of the patent: **17.05.2017**
(21) Application number: 11725752.7
(22) Date of filing: 17.06.2011
(51) Int. Cl.: C25B 11/04

(54) **ELECTRODE FOR ELECTROCHLORINATION**
ELEKTRODE FÜR ELEKTROCHLORIERUNG
ELECTRODE POUR UNE ÉLECTROCHLORATION

(30) Priority: 17.06.2010 IT MI20101098
(43) Date of publication of application: 24.04.2013
(73) Proprietor: Industrie De Nora S.p.A., 20134 Milano (IT)
(72) Inventor: ANTOZZI, Antonio, Lorenzo, I-23807 Merate (LC) (IT); BENEDETTO, Mariachiara, I-20153 Milan (IT); CALDERARA, Alice, I-26020 Agnadello (CR) (IT); PEZZONI, Chiara, I-20060 Cassina de' Pecchi (MI) (IT); URGEGHE, Christian, I-20090 Redecesio-Segrate (MI) (IT)
(74) Representative: Reitstötter Kinzebach
(86) International application number: PCT/EP2011/060078
(87) International publication number: WO 2011/157811

(56) References cited:
- WO-A1-83/03265
- WO-A1-2010/055065
- US-A- 4 070 504
- US-A- 5 587 058
- US-A- 6 103 093

## Description

### FIELD OF THE INVENTION

The invention relates to an electrode for electrochemical generation of hypochlorite.

### BACKGROUND OF THE INVENTION

The electrolytic production of hypochlorite from diluted brines of alkali metal chlorides, e.g. of sodium hypochlorite by electrolysis of aqueous solution of sodium chloride or of sea-water, is one of the most common processes in the domain of industrial electrochemistry. The production of hypochlorite is always accompanied by the generation of various by-products deriving from the oxidation of chlorides (generally grouped under the name of "active chlorine") and in some cases of oxygenated species such as peroxides, most of which have a very limited lifetime; for the sake of brevity, in the present text the whole of such products in aqueous solution, mostly consisting of alkali metal hypochlorite and hypochlorous acid in a ratio mainly depending on pH, is indicated as hypochlorite. Depending on the production volumes and concentrations, product hypochlorite may be used in several ways, for instance in paper and cloth bleaching, in the disinfection of drinking or pool water or for domestic uses. Potassium hypochlorite is also employed in preventive or therapeutic treatment of agricultural cultivations. Hypochlorite is generally produced in undivided electrolytic cells with electrodes of various shapes and geometry, for example with interleaved planar electrodes. In an electrolytic cell, hypochlorite production takes place by anodic oxidation of chloride, while hydrogen is evolved at the cathode; when the chloride solution to be electrolysed contains sensible amounts of calcium or magnesium ions, such as the case of civil water chlorination, the natural alkalinisation of the electrolyte in the proximity of the cathode surface causes the local precipitation of limestone, which tends to deactivate the cathodes and prevent their operability after some time. Among the various solutions proposed to obviate this problem, one of the most effective consists of submitting the electrodes to cyclic potential reversal, alternating their use as cathodes and as anodes. In this way, the carbonate deposit which settles on the surface of an electrode under cathodic operation is dissolved during the subsequent operation as anode, in which condition the surrounding environment tends to acidify. Since hydrogen evolution takes place at sufficiently low potential on many metallic materials, the electrodes of an electrochlorinator designed to work under alternate electrodic polarisation are activated with a catalyst aimed at maximising the efficiency of the hypochlorite generation anodic reaction, more critical both in terms of overpotential and of selectivity due to the concurrent, undesired oxygen evolution anodic reaction. A catalyst whose efficiency is well known in this process comprises a mixture of oxides of noble metals (typically ruthenium and optionally iridium or palladium) and of valve metal oxides, preferably titanium oxide. Such catalyst is applied according to various methodologies to a substrate typically made of titanium, which allows obtaining an electrode configuration capable of working as cathode for hydrogen evolution with a good efficiency. The noble metal in the catalytic formulation has the main purpose of catalysing the anodic reaction and is bound to the valve metal in a solid solution which contributes to reduce the consumption thereof; other valve metals, such as tantalum and niobium, might be used to replace titanium, although they are considered a less valid alternative due to their tendency to decrease the anodic reaction selectivity thereby producing a higher amount of oxygen with a net loss of hypochlorite.

The functioning of the electrodes in alternate polarisation conditions allows operating with good efficiency while keeping the electrode surface sufficiently clean from insoluble deposits; nevertheless, cathodic operation under hydrogen evolution of such type of electrode configurations entails a reduced operative lifetime, because the adhesion of the coating to the substrate tends to be hampered in these conditions. The deactivation mechanism of this type of electrodes, mainly associated with the consumption of the catalyst layer or the detachment thereof from the substrate, brings about a sudden failure with no significant premonitory sign; in order to prevent serious inconveniences, an estimation of residual lifetime of the electrodes in a cell is usually carried out on a statistical basis and their replacement is scheduled before a quick and irreversible failure occurs. Since the deactivation of electrodes working under this kind of operative conditions is affected by several factors, the variability is rather high, so that keeping a sufficient margin of safety often implies replacing electrodes which might have been functioning for a significant residual time.

It has been thus evidenced the need for providing a new electrode composition for operation in alternate polarity conditions in electrolytic processes with production of hypochlorite, characterised by an equal or higher overall duration with respect to prior art formulations and by a deactivation profile allowing to conveniently schedule their substitution by better forecasting their residual lifetime.

### SUMMARY OF THE INVENTION

Various aspects of the invention are set out in the accompanying claims.

In one embodiment, an electrode for hypochlorite generation comprises a substrate made of a valve metal, typically titanium optionally alloyed, having a suitable roughness profile, an internal catalytic coating and an external catalytic coating of different composition and higher activity overlying the internal catalytic coating, the roughness profile being characterised by Rₐ comprised between 4 and 8 µm and R_{z} comprised between 20 and 50 µm, the internal catalytic coating containing oxides of iridium, ruthenium and a valve metal selected between tantalum and niobium with an overall specific loading of iridium plus ruthenium expressed as metals of 2 to 5 g/m², the external catalytic coating containing noble metal oxides with an overall specific loading not lower than 7 g/m². The external catalytic coating comprises a mixture of oxides of iridium, ruthenium and titanium with a molar concentration of ruthenium of 12-18%, a molar concentration of iridium of 6-10% and a molar concentration of titanium of 72-82%. A roughness profile as indicated, characterised by rather deep cavities relatively spaced apart, allows overlying two distinct catalytic coatings so that the innermost coating, strongly anchored within the cavities, starts working only upon completion of the detachment of the outermost coating. The inventors surprisingly observed that the electrode as hereinbefore described is characterised by a two-step deactivation mechanism, with a first voltage increase with respect to the normal operative voltage up to sensibly higher values still suitable however to continue its operation (for instance a voltage increase of 500-800 mV) and a second, quicker voltage increase forcing its definitive shut-down. Without wishing to limit the present invention to any particular theory, it might be supposed that a configuration providing an internal coating not too efficient towards hypochlorite generation, such as a combination of oxides of noble metals as iridium and ruthenium in admixture with an oxide of tantalum and/or niobium, and an external coating of higher performances, such as a mixture of oxides of iridium, ruthenium and titanium, allows the electrode to operate at excellent voltage levels until the external coating, conveniently provided at a higher specific loading, is present on the electrode surface; once the external coating is worn off, the internal coating gets uncovered. The internal coating, which can have a limited specific loading but which is extremely well anchored to the surface due to the specially selected roughness profile, is capable of operating, although at lesser efficiency and higher cell voltage, for a sufficiently prolonged period of time that permits scheduling the substitution of the whole cell or of the electrodes preventing the risk of a sudden failure. The internal catalytic coating contains a mixtures of oxides of iridium, ruthenium and tantalum with a ruthenium molar concentration of 42-52%, an iridium molar concentration of 22-28% and a tantalum molar concentration of 20-36%. The indicated compositional ranges turned out to be particularly suitable for the formulation of electrodes characterised by a deactivation profile which allows forecasting the need of scheduling a replacement intervention with sufficient anticipation. In one embodiment, the electrode as hereinbefore described comprises a thin protective layer of valve metal oxides, for instance a mixture of oxides of titanium and tantalum, interposed between the substrate and the internal catalytic layer. This can have the advantage of protecting the substrate from passivation phenomena, improving its overall duration without fundamentally affecting the characteristic two-step deactivation mechanism.

Under another aspect, a method for manufacturing an electrode as hereinbefore described comprises:
- forming the desired roughness profile by thermally treating the substrate at a temperature not lower than 550°C, for instance at 590°C, for a period of at least 4 hours, for instance 5 hours, followed by an acid etching;
- sequentially applying the internal catalytic layer and then the external one by thermal decomposition of suitable precursor solutions.

The thermal treatment of the substrate followed by etching according to the indicated parameters has likely the effect of segregating the impurities of the substrate in correspondence of the crystalline grain boundaries; in this way, grain boundaries become a zone of preferential attack for the subsequent etching. This can have the advantage of favouring the formation of a roughness profile consisting of deep and relatively spaced apart peaks and valleys, so as to efficaciously anchor the internal catalytic layer even at reduced specific loadings of noble metal. The treatment can be carried out in a common oven with forced air ventilation; at the end of the thermal treatment, the substrate can be allowed to cool down slowly in the oven and extracted when the temperature goes below 300°C. In one embodiment, particularly suited to titanium and titanium alloy substrates, the acid etching is carried out with 25-30% by weight sulphuric acid containing 5 to 10 g/l of dissolved titanium, at a temperature ranging from 80 to 90°C until reaching a weight loss not lower than 180 g/m² of metal. The inventors observed that these conditions are particularly favourable for the preferential attack of impurities segregated on the grain boundary during the previous thermal treatment, facilitating the achievement of the desired roughness profile. The etching bath can be put into service with a dissolved titanium concentration of about 5 g/l and used until the titanium concentration reaches about 10 g/l by effect of the dissolution of the substrate itself, then reintegrated with a fresh acid addition until the concentration of dissolved titanium is brought back to the original value of about 5 g/l. The titanium in the solution favours the kinetics of dissolution of the valve metal in the etching phase: concentrations below 5 g/l are associated with a dissolution rate which results too slow for practical purposes. On the other hand, an excessive concentration slows down the attack again. A thermally-treated titanium substrate subjected to an etching step as described reaches a weight loss of 180-220 grams per square metre of surface, a value considered to be suitable for the subsequent catalytic coating deposition, in a 2 to 3 hour time. In one embodiment, the thermally-treated substrate can be subjected to sandblasting before the acid etching. In one embodiment, the substrate subjected to the desired thermal treatment, the optional sandblasting and the etching is provided with a this protective layer consisting of valve metal oxides prior to the application of catalytic coatings. The protective layer can be applied by means of a second thermal treatment of the valve metal substrate in air, with growth of the corresponding oxide, or by an application, for instance of titanium and/or tantalum oxide, by flame or plasma spraying, or by thermal decomposition of a suitable precursor solution. The formation of the internal catalytic layer can be carried out by application and subsequent thermal decomposition, optionally in multiple coats, of a precursor solution containing salts or other compounds of iridium, ruthenium and at least one valve metal selected between tantalum and niobium, until reaching an overall loading of 2-5 g/m² of noble metal defined as sum of iridium and ruthenium expressed as metals. The formation of the external catalytic layer can be carried out by application and subsequent thermal decomposition, optionally in multiple coats, of a precursor solution containing salts or other compounds of noble metals, for instance iridium and ruthenium, and of at least one valve metal, for instance titanium, until reaching an overall loading of at least 7 g/m² of noble metal defined as sum of iridium and ruthenium expressed as metals.

Under another aspect, an electrochemical cell for production of hypochlorite from a chloride-containing aqueous electrolyte comprises pairs of electrodes as hereinbefore described and a timed control used to polarise the electrodes alternatively so as to determine the operation of one electrode of the pair as cathode and of the other as anode and to cyclically reverse their polarity after a predetermined period of time, which in one embodiment is comprised between 30 seconds and 60 minutes. In one embodiment, the aqueous electrolyte is an alkali metal chloride solution, for instance sodium chloride or potassium chloride or a mixture of the two, with a chloride ion concentration of 2 to 20 g/l.

The following examples are included to demonstrate particular embodiments of the invention, whose practicability has been largely verified in the claimed range of values. It should be appreciated by those of skill in the art that the compositions and techniques disclosed in the examples which follow represent compositions and techniques discovered by the inventors to function well in the practice of the invention; however, those of skill in the art should, in light of the present disclosure, appreciate that many changes can be made in the specific embodiments which are disclosed and still obtain a like or similar result without departing from the scope of the invention.

### EXAMPLE 1

Two titanium sheets of 10 cm² area and 0.5 mm thickness were washed with hot water and soap, rinsed with deionised water and degreased with acetone. A thermal treatment was subsequently carried out on the sheets in a forced air ventilation oven at 590°C for 5 hours. The thermally-treated samples were allowed to cool in the same oven down to a temperature of 290°C, then extracted, weighed and subjected to an etching treatment on 27% H₂SO₄ containing 5 g/l of titanium at a temperature of 87°C. After two hours of treatment, the samples were again washed, dried and weighted, recording a titanium loss of about 200 g/m². A roughness profile check, carried out with a Mitutoyo SJ-301 profilometer, evidenced an Rₐ value of 5.2-5.3 µm and an R_{z} value of about 32 µm.

On the two faces of the thus treated sheets an internal catalytic coating was applied by thermal decomposition of a first precursor solution containing 47% molar Ru, 24.7% molar Ir and 28.3% molar Ta. The precursor solution was obtained starting from a 20% by weight commercial solution of RuCl₃, a 23% by weight commercial solution of H₂IrCl₆ and a solution of TaCl₅ at a concentration of 50 g/l obtained by dissolution of solid TaCl₅ in 37% by weight HCl by heating under stirring and subsequent dilution with water and commercial 2-propanol. The components were mixed under stirring, first adding a weighted amount of H₂IrCl₆ solution, then the corresponding amount of RuCl₃. After stirring for 30 minutes, the solution of TaCl₅ was added and after 30 more minutes the mixture was brought to volume with 2-propanol, protracting the stirring for 30 minutes more. The thus obtained precursor solution was applied to the titanium sheets, previously dried on air at 50°C, by brushing in 3 coats, with a subsequent decomposition cycle in forced air ventilation oven at 510°C for a time of 10 minutes after each intermediate coat and of 30 minutes after the final coat.

A subsequent weight check evidenced the application of an internal catalytic coating of 3 g/m² of noble metal, expressed as the sum of Ir and Ru.

On the two faces of the sheets an external catalytic coating was applied by thermal decomposition of a second precursor solution containing 15% molar Ru, 7.9% molar Ir and 77.1% molar Ti. The second precursor solution was obtained starting from the same reagents used for the first one, with the addition of commercial TiOCl₂ at 160-180 g/l as a replacement for TaCl₅. Also the preparation was carried out by mixing under stirring exactly as in the previous case, except that TiOCl₂ and soon after 18% HCl were added instead of the solution of TaCl₅.

The second precursor solution was applied to the titanium sheets, previously dried on air at 50°C, by brushing in 14 coats, with a subsequent decomposition cycle in forced air ventilation oven at 510°C for a time of 10 minutes after each intermediate coat and of 30 minutes after the final coat.

A subsequent weight check evidenced the application of an external catalytic coating of 12 g/m² of noble metal, expressed as the sum of Ir and Ru.

The thus obtained electrodes were characterised in an accelerated life-test under hypochlorite production with periodic polarity reversal. The accelerated test is carried out at a current density of 1 kA/m² in an electrolyte consisting of an aqueous solution containing 4 g/l of NaCl and 70 g/l of Na₂SO₄, adjusting the temperature at 25±1 °C and reversing the polarity of the two electrodes after every 60 seconds. In such operative conditions, much exasperated in comparison with the industrial application, a constant behaviour was observed with a cell voltage around 3 V for approximately 300 hours, followed by a progressive cell voltage increase stabilised, after a total of 400 hours, at a new constant value, about 800 mV higher than the previous one. It was nevertheless still possible to operate the cell, albeit at a higher voltage, after a total 600 hours of test.

### EXAMPLE 2

Example 1 was repeated in identical conditions, save for the use of a first precursor solution containing 47% molar Ru, 24.7 molar Ir and 28.3 molar Nb, obtained by replacing the TaCl₅ solution with a 1 M solution of NbCl₅. The obtained electrodes were characterised in the accelerated life-test of Example 1, which gave substantially equivalent results than in the previous example, with a constant cell operation at about 3 V cell voltage for approximately 215 hours, followed by a progressive voltage increase stabilised after a total of 320 hours, at a new constant value, about 600 mV higher than the previous one. In this case the test was protracted for a total of 400 hours, with some shifting of the cell voltage to higher values in the course of the last 40 hours.

### COUNTEREXAMPLE

Two titanium sheets of 10 cm² area and 0.5 mm thickness were washed with hot water and soap, rinsed with deionised water and degreased with acetone. A thermal treatment was subsequently carried out on the sheets in a forced air ventilation oven at 590°C for 5 hours. The thermally-treated samples were allowed to cool in the same oven down to a temperature of 290°C, then extracted, weighed and subjected to an etching treatment on 27% H₂SO₄ containing 5 g/l of titanium at a temperature of 87°C. After two hours of treatment, the samples were again washed, dried and weighted, observing a titanium loss of about 200 g/m². A roughness profile check, carried out with a Mitutoyo SJ-301 profilometer, evidenced an Rₐ value of 5.4-5.6 µm and an R_{z} value of about 34 µm.

On the two faces of the thus treated sheets a catalytic coating was applied by thermal decomposition of a precursor solution containing 15% molar Ru, 7.9% molar Ir and 77.1% molar Ti, equivalent to the second precursor solution of Example 1. The precursor solution was applied to the titanium sheets, previously dried on air at 50°C, by brushing in 17 coats, with a subsequent decomposition cycle in forced air ventilation oven at 510°C for a time of 10 minutes after each intermediate coat and of 60 minutes after the final coat.

A subsequent weight check evidenced the application of an external catalytic coating of 15 g/m² of noble metal, expressed as the sum of Ir and Ru. The thus obtained electrodes were characterised in the accelerated life-test of Example 1, allowing a constant cell operation at a cell voltage of about 3 V for approximately 230 hours, followed by a sudden voltage increase indicating the deactivation of the electrodes to an extent which forced the discontinuation of the test.

The previous description is not intended to limit the invention, which may be used according to different embodiments without departing from the scopes thereof, and whose extent is univocally defined by the appended claims.

Throughout the description and claims of the present application, the term "comprise" and variations thereof such as "comprising" and "comprises" are not intended to exclude the presence of other elements or additives.

The discussion of documents, acts, materials, devices, articles and the like is included in this specification solely for the purpose of providing a context for the present invention. It is not suggested or represented that any or all of these matters formed part of the prior art base or were common general knowledge in the field relevant to the present invention before the priority date of each claim of this application.

## Claims

1. Electrode for electrolytic cell comprising a valve metal substrate, an internal catalytic coating and an external catalytic coating of different composition and higher activity overlaid thereto, the roughness profile of said substrate having an Rₐ value of 4 to 8 µm and an R_{z} value of 20 to 50 µm, said internal catalytic coating containing oxides of iridium, ruthenium and a valve metal selected between tantalum and niobium with an overall specific loading of iridium and ruthenium expressed as metals of 2 to 5 g/m², said external catalytic coating containing noble metal oxides with a specific loading not lower than 7 g/m²,
wherein said external catalytic coating comprises a mixture of oxides of iridium, ruthenium and titanium with a molar concentration of ruthenium of 12-18%, a molar concentration of iridium of 6-10% and a molar concentration of titanium of 72-82%, and,
wherein said internal catalytic coating contains a mixture of oxides of iridium, ruthenium and tantalum with a molar concentration of ruthenium of 42-52%, a molar concentration of iridium of 22-28% and a molar concentration of tantalum of 20-36%.

2. The electrode according to claim 1 comprising a protective layer consisting of valve metal oxides interposed between said substrate and said internal catalytic coating.

3. Method for the production of an electrode according to any one of claims 1 or 2 comprising the following steps:
- thermal treatment of said valve metal substrate for a time not lower than 4 hours at a temperature not lower than 560°C
- acid etching
- application of said internal catalytic coating by thermal decomposition of a precursor solution
- application of said external catalytic coating by thermal decomposition of a precursor solution.

4. The method according to claim 3 wherein said acid etching step is carried out in 25-30% by weight sulphuric acid containing 5 to 10 g/l of dissolved titanium, at a temperature of 80 to 90°C until reaching a weight loss not lower than 180 g/m² of metal.

5. The method according to claim 3 or 4 comprising, before said internal catalytic coating application step, an additional step of application of a protective layer consisting of valve metal oxides by a technique selected between a thermal treatment of the substrate, a flame or plasma spray application and a thermal decomposition of a precursor solution.

6. Electrochemical cell for alkali metal hypochlorite production comprising an aqueous electrolyte containing alkali metal chlorides, at least one pair of electrodes according to any one of claims 1 or 2 and a timed control system to alternately polarise said electrodes for a predetermined period of time determining the functioning thereof as anode and as cathode respectively.

7. The cell according to claim 6 wherein said aqueous electrolyte has an ion chloride concentration of 2 to 20 g/l.

8. The cell according to claim 6 or 7 wherein said predetermined period of time is 0.5 to 60 minutes.

## Patentansprüche

1. Elektrode für eine Elektrolysezelle, umfassend ein Ventilmetallsubstrat, eine innere katalytische Schicht und eine darauf überlagerte äußere katalytische Schicht mit unterschiedlicher Zusammensetzung und höherer Aktivität, wobei das Rauigkeitsprofil des Substrats einen Wert Rₐ von 4 bis 8 µm und einen Wert R_{z} von 20 bis 50 µm aufweist, wobei die innere katalytische Schicht Oxide von Iridium, Ruthenium und einem Ventilmetall, ausgewählt zwischen Tantal und Niob, enthält, mit einer gesamten spezifischen Beladung von Iridium und Ruthenium von 2 bis 5 g/m² als Metalle, wobei die äußere katalytische Schicht Edelmetalloxide mit einer spezifischen Beladung von nicht weniger als 7 g/m² enthält, wobei die äußere katalytische Schicht eine Mischung von Oxide von Iridium, Ruthenium und Titan mit einer molaren Konzentration von Ruthenium von 12-18 %, einer molaren Konzentration von Iridium von 6-10 % und einer molaren Konzentration von Titan von 72-82 % umfasst, und wobei die innere katalytische Schicht eine Mischung von Oxid den von Iridium, Ruthenium und Tantal mit einer molaren Konzentration von Ruthenium von 42-52 %, einer molaren Konzentration von Iridium von 22-28 % und einer molaren Konzentration von Tantal von 20-36 % enthält.

2. Elektrode gemäß Anspruch 1, umfassend eine Schutzschicht, bestehend aus zwischen dem Substrat und der inneren katalytischen Schicht angeordneten Ventilmetalloxiden.

3. Verfahren zur Herstellung einer Elektrode gemäß einem der Ansprüche 1 oder 2, umfassend die folgenden Schritte:
- Thermische Behandlung des Ventilmetall Substrats für eine Zeit von nicht weniger als 4 Stunden bei einer Temperatur nicht unter 560°C,
- Säureätzen,
- Aufbringen der inneren katalytischen Schicht durch thermische Zersetzung einer Präkursorlösung und
- Aufbringen der äußeren katalytischen Schicht durch thermische Zersetzung einer Präkursorlösung.

4. Verfahren gemäß Anspruch 3, wobei der Schritt des Säureätzens in 25-30 Gew.-% Schwefelsäure, enthaltend 5-10 g/l aufgelöst ist Titan, bei einer Temperatur von 80-90°C bis zum Erreichen eines Gewichtsverlustes von nicht weniger als 180 g/m² Metall ausgeführt wird.

5. Verfahren gemäß Anspruch 3 oder 4, umfassend, vor dem Schritt des Aufbringens der inneren katalytischen Schicht, einen zusätzlichen Schritt des aufbringen einer Schutzschicht, bestehend aus Ventilmetalloxid den durch eine Technik, ausgewählt zwischen einer thermischen Behandlung des Substrats, Anwendung von Flammspritzen oder Plasmaspritzen und einer thermischen Zersetzung einer Präkursorlösung.

6. Elektrochemische Zelle zur Herstellung von Alkalimetallhypochlorit, umfassend einen wässrigen Elektrolyten, der Alkalimetallchloride enthält, zumindest ein Elektronenpaar gemäß einem der Ansprüche 1 oder 2 und ein zeitgesteuertes Steuerungssystem, um die Elektroden abwechselnd für eine bestimmte Zeitspanne zu polarisieren und damit deren Funktion als Anode beziehungsweise als Kathode festzulegen.

7. Zelle gemäß Anspruch 6, wobei der wässrige Elektrolyt eine Chloridionenkonzentration von 2 bis 20 g/l aufweist.

8. Zelle gemäß Anspruch 6 oder 7, wobei die bestimmte Zeitspanne 0,5 bis 60 Minuten beträgt.

## Revendications

1. Electrode pour cellule d'électrolyse, comprenant un substrat de métal valve, recouvert d'un revêtement catalytique interne et d'un revêtement catalytique externe de composition différente et d'activité supérieure, le profil de rugosité dudit substrat ayant une valeur Rₐ de 4 à 8 µm et une valeur R_{z} de 2 à 50 µm, ledit revêtement catalytique interne contenant des oxydes d'iridium, de ruthénium et un métal valve choisi entre le tantale et le niobium avec une charge spécifique globale d'iridium et de ruthénium exprimés en métaux de 2 à 5 g/m², ledit revêtement catalytique externe contenant des oxydes métalliques nobles ayant une charge spécifique non inférieure à 7 g/m²,
ledit revêtement catalytique externe comprenant un mélange d'oxydes d'iridium, de ruthénium et de titane avec une concentration molaire de ruthénium de 12 à 18%, une concentration molaire d'iridium de 6 à 10% et une concentration molaire de titane de 72 à 82%, et
ledit revêtement catalytique interne comprenant un mélange d'oxydes d'iridium, de ruthénium et de tantale avec une concentration molaire de ruthénium de 42 à 52%, une concentration molaire d'iridium de 22 à 28% et une concentration molaire de tantale de 20 à 36%.

2. Electrode selon la revendication 1, comprenant une couche protectrice consistant en des oxydes de métal valve interposés entre ledit substrat et ledit revêtement catalytique interne.

3. Procédé pour la production d'une électrode selon l'une quelconque des revendications 1 ou 2, comprenant les étapes suivantes :
- traitement thermique dudit substrat de métal valve pendant une durée non inférieure à 4 heures à une température non inférieure à 560°C,
- attaque à l'acide,
- application dudit revêtement catalytique interne par décomposition thermique d'une solution précurseur,
- application dudit revêtement catalytique externe par décomposition thermique d'une solution précurseur.

4. Procédé selon la revendication 3, dans lequel ladite étape d'attaque à l'acide est réalisée dans 25 à 30% en poids d'acide sulfurique contenant 5 à 10 g/l de titane dissous, à une température de 80 à 90°C jusqu'à atteindre une perte pondérale non inférieure à 180 g/m² de métal.

5. Procédé selon la revendication 3 ou 4, comprenant avant ladite étape d'application du revêtement catalytique interne, une étape additionnelle d'application d'une couche protectrice consistant en des oxydes de métal valve par une technique choisie entre un traitement thermique du substrat, une application de pulvérisation à la flamme ou au plasma et une décomposition thermique d'une solution précurseur.

6. Cellule électrochimique pour la production d'hypochlorite de métal alcalin, comprenant un électrolyte aqueux contenant des chlorures de métaux alcalins, au moins une paire d'électrodes selon l'une quelconque des revendications 1 ou 2 et un système de commande minuté pour polariser alternativement lesdites électrodes pour un laps de temps prédéterminé, déterminant le fonctionnement de celles-ci respectivement en tant qu'anode ou en tant que cathode.

7. Cellule selon la revendication 6, dans laquelle ledit électrolyte aqueux a une concentration en ions chlorures de 2 à 20 g/l.

8. Cellule selon la revendication 6 ou 7, dans laquelle ledit laps de temps prédéterminé est de 0,5 à 60 minutes.
